# EUROPEAN PATENT APPLICATION

(11) **EP 4 815 216 A1**
(43) Date of publication of application: **30.09.2026**
(21) Application number: 26157756.3
(22) Date of filing: 11.02.2026
(51) Int. Cl.: H01R 13/74, H01R 13/621

(54) **WIRELESS TRANSMISSION DEVICE**

(30) Priority: 26.02.2025 TW 114107124
(71) Applicant: BenQ Corporation, Taipei 114 (TW)
(72) Inventor: WU, Chen-Chi, Taipei City 114 (TW); LIN, Cheng-Pu, Taipei City 114 (TW); HUANG, Yu-Ping, Taipei City 114 (TW); YEN, Chao-Kuang, Taipei City 114 (TW); LIN, Chun-Han, Taipei City 114 (TW); CHIANG, Chin-Fu, Taipei City 114 (TW); JUAN, Cheng-Chieh, Taipei City 114 (TW)
(74) Representative: dompatent

(57) **Abstract**

A wireless transmission device includes a body, a connecting line, and at least one fixing member. The body has at least one slot, a first magnetic element, and a first locking-hole fixing device. The first magnetic element is disposed adjacent to the slot. The connecting line has at least one plug, a second magnetic element, and a second locking-hole fixing device. The second magnetic element is disposed adjacent to the plug. At least one fixing member is inserted into the first and second locking-hole fixing devices, so that the connecting line is connected with the body. When the plug is inserted into the slot, the first and second magnetic elements are attracted to each other. When the fixing member is inserted into the first and second locking-hole fixing devices, the fixing member is attracted by the magnetism of the first locking-hole fixing device.

## Description

### BACKGROUND OF THE INVENTION

### Field of the Invention

The invention relates in general to a wireless transmission device.

### Description of the Related Art

Along with the advancement in computer technology and network communications, meetings conducted in conference rooms have increasingly adopted approaches that integrate computer technology and wireless network communication, thereby enhancing the convenience of meetings and incorporating a wider range of applicable functions. When a wireless transmission device is used with a computer, the computer's audio and video signals may be transmitted wirelessly through the wireless transmission device. This arrangement increases the convenience of conducting meetings in conference rooms and improves the effectiveness of the meeting process.

For certain wireless transmission devices (for instance, a wireless transmitter), the configuration of different types of wires is allowed. When a wire is to be removed from the wireless transmission device and replaced with another type of wire, a user who is unfamiliar with the replacement procedure may easily make operational mistakes and thus be unable to complete the operation of wire replacement. In some cases, improper configuration of the wire on the wireless transmission device may even result in malfunction of the wireless transmission device. Therefore, it has become an imminent task for the industries to facilitate the user in replacing the wire of the wireless transmission device and to avoid malfunction caused by improper configuration of the wire.

### SUMMARY OF THE INVENTION

According to one embodiment of the present invention, a wireless transmission device including a body, a connecting line, and at least one fixing member is provided. The body has at least one slot, a first magnetic element, and a first locking-hole fixing device. The first magnetic element is magnetic. The connecting line has at least one plug, a second magnetic element, and a second locking-hole fixing device. The second magnetic element is disposed adjacent to at least one plug. At least one fixing member is inserted into the first and second locking-hole fixing devices, so that the connecting line is connected with the body. When the at least one plug is inserted into the at least one slot, the first and second magnetic elements are attracted to each other. When the at least one fixing member is inserted into the first and second locking-hole fixing devices, at least one fixing member is attracted by the magnetism of the first locking-hole fixing device.

The above and other aspects of the invention will become better understood with regard to the following detailed description of the preferred but non-limiting embodiment (s). The following description is made with reference to the accompanying drawings.

### BRIEF DESCRIPTION OF THE DRAWINGS

FIG. 1 is a perspective view of a wireless transmission device according to an embodiment of the invention.
FIG. 2 is an exploded perspective view of a wireless transmission device according to an embodiment of the invention.
FIG. 3 is an exploded perspective view of a wireless transmission device viewed from another view-angle according to an embodiment of the invention.
FIG. 4 is an exploded perspective view of a wireless transmission device according to an embodiment of the invention.
FIG. 5 is an exploded perspective view of the wireless transmission device of FIG. 4 viewed from another view-angle.
FIG. 6 is a partial internal perspective view of a wireless transmission device according to an embodiment of the invention.
FIG. 7 is a top view of an example of a C-shaped ring used in the wireless transmission device of FIG. 4.
FIG. 8A is a schematic side view before a fixing member having a groove is engaged with a C-shaped ring.
FIG. 8B is a schematic side view after a fixing member having a groove is engaged with a C-shaped ring.
FIG. 8C is a schematic side view before a limiting groove of a fixing member is engaged with a protrusion of a corresponding hole-slot.
FIG. 8D is a schematic side view after a limiting groove of a fixing member is engaged with a protrusion of a corresponding hole-slot.
FIG. 9 is a partial top view of a wireless transmission device according to an embodiment of the invention.
FIG. 10A and FIG. 10B are schematic diagrams of partial components of a wireless transmission device according to another embodiment of the invention.
FIG. 11A and FIG. 11B are schematic diagrams of partial components of a wireless transmission device according to an alternate embodiment of the invention.
FIG. 12A and FIG. 12B are schematic diagrams of partial components of a wireless transmission device according to another alternate embodiment of the invention.
FIG. 13 is an explosion diagram of a wireless transmission device according to another embodiment of the invention.

### DETAILED DESCRIPTION OF THE INVENTION

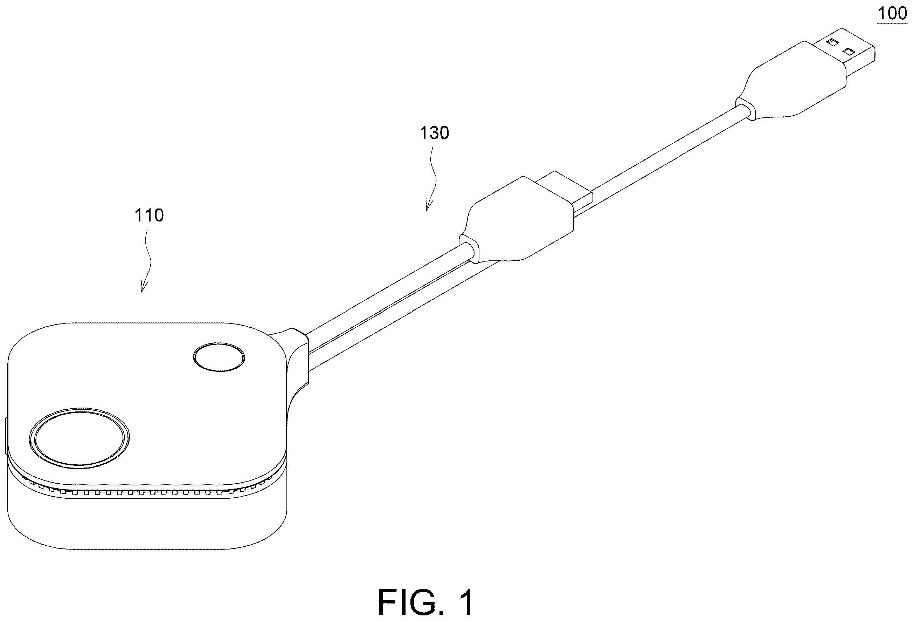

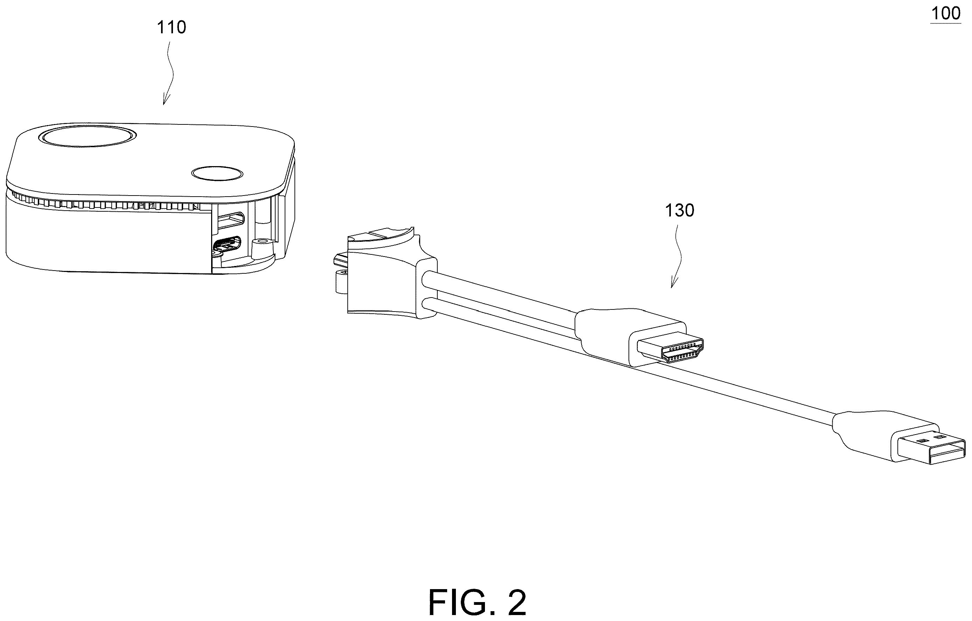

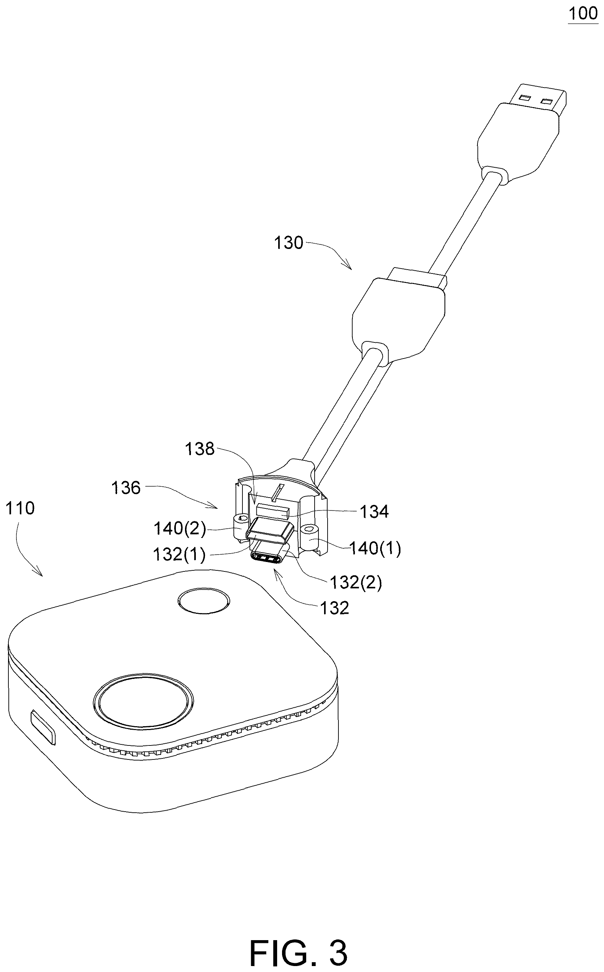

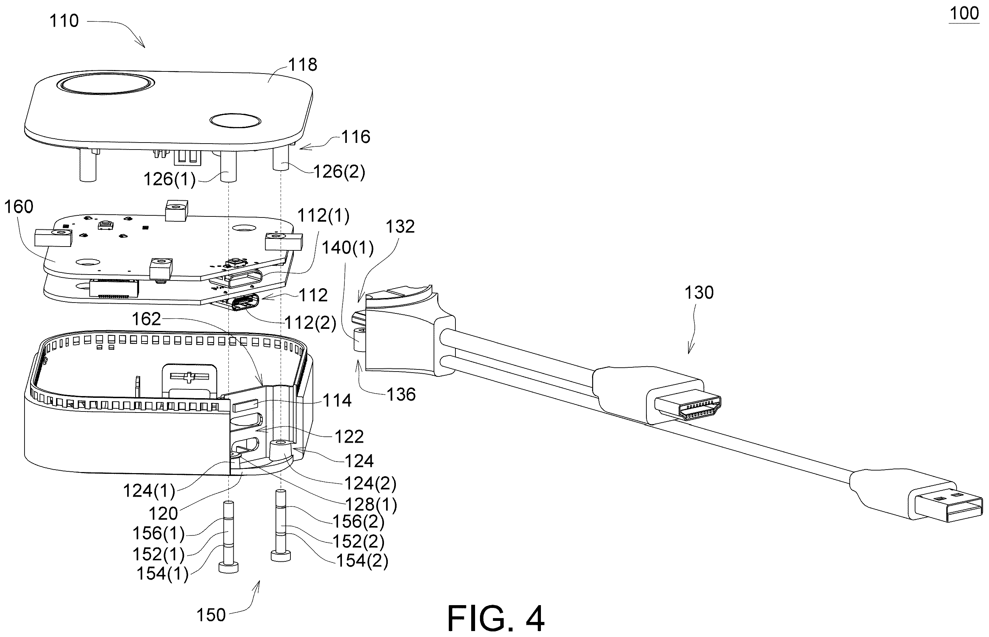

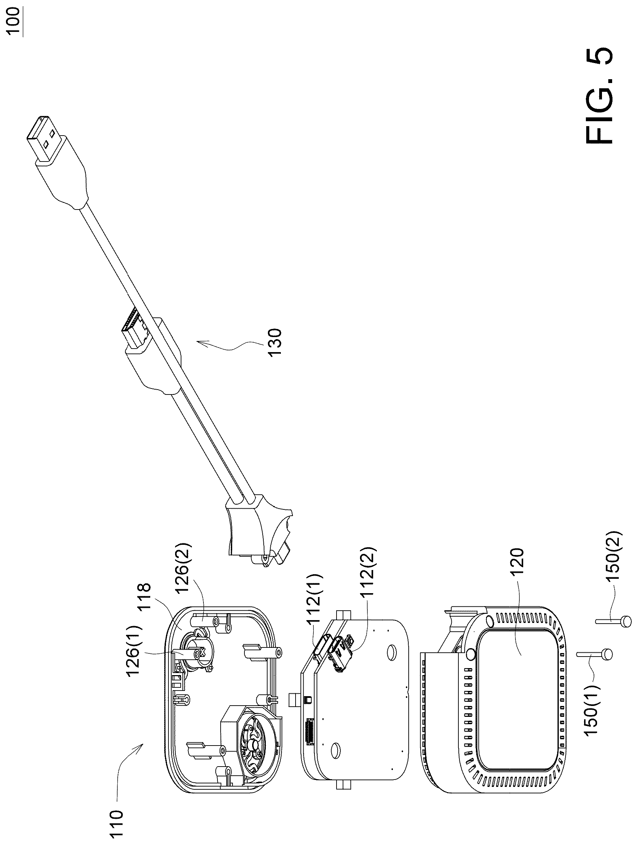

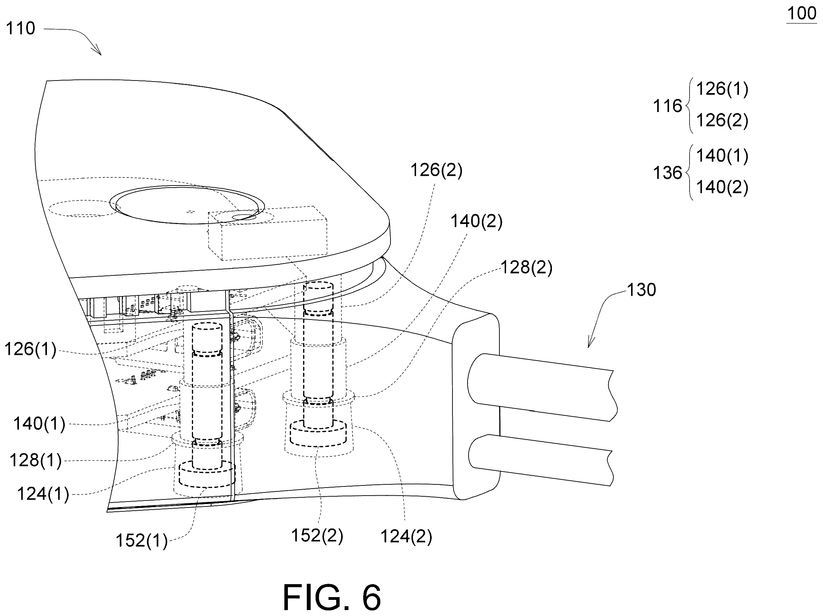

Refer to FIG. 1 to FIG. 6. FIG. 1 is a perspective view of a wireless transmission device according to an embodiment of the invention. FIG. 2 is an exploded perspective view of a wireless transmission device according to an embodiment of the invention. FIG. 3 is an exploded perspective view of a wireless transmission device viewed from another view-angle according to an embodiment of the invention. FIG. 4 is an exploded perspective view of a wireless transmission device according to an embodiment of the invention. FIG. 5 is an exploded perspective view of the wireless transmission device of FIG. 4 viewed from another view-angle. FIG. 6 is a partial internal perspective view of a wireless transmission device according to an embodiment of the invention.

The wireless transmission device 100 includes a body 110, a connecting line 130, and at least one fixing member 150. The body 110 has at least one slot 112, a first magnetic element 114, and a first locking-hole fixing device 116. The first magnetic element 114 is disposed adjacent to the at least one slot 112. The first locking-hole fixing device 116 is magnetic.

The connecting line 130 has at least one plug 132, a second magnetic element 134, and a second locking-hole fixing device 136. The second magnetic element 134 is disposed adjacent to the at least one plug 132. At least one fixing member 150 is configured to be inserted into the first locking-hole fixing device 116 and the second locking-hole fixing device 136, so that the connecting line 130 is connected with the body 110.

When the at least one plug 132 is inserted into the at least one slot 112, the first magnetic element 114 and the second magnetic element 134 are attracted to each other. When the at least one fixing member 150 is inserted into the first locking-hole fixing device 116 and the second locking-hole fixing device 136, the at least one fixing member 150 is attracted by the magnetism of the first locking-hole fixing device 116.

When the connecting line 130 approaches the body 110 and causes the at least one plug 132 to be inserted into the at least one slot 112, the first magnetic element 114 and the second magnetic element 134 are attracted to each other. Through the attraction of the first magnetic element 114 and the second magnetic element 134, it is easier for the user to dispose the connecting line 130 on the body 110. Moreover, such design has fool-proof function which effectively avoids misconfiguration caused by the user. Furthermore, the design of attracting the at least one fixing member 150 by the magnetism of the first locking-hole fixing device 116 not only increases installation convenience for the user but also enhances the connection between the at least one fixing member 150 and the first locking-hole fixing device 116, so that the user can successfully complete the operation of wire replacement. Besides, the malfunction of the wireless transmission device caused by improper wire configuration in the wireless transmission device may be avoided. Operations of the wireless transmission device mentioned above are disclosed below.

The at least one fixing member 150, for example, includes a first fixing member 152(1) and a second fixing member 152(2). The body 110 has an upper cover 118 and a lower cover 120. The first locking-hole fixing device 116 is disposed on the upper cover 118. The first fixing member 152(1) and the second fixing member 152(2) are inserted into the first locking-hole fixing device 116 and the second locking-hole fixing device 136 by passing through the lower cover 120.

The opening of the second locking-hole fixing device 136 and the opening of the first locking-hole fixing device 116 are arranged opposite each other along an extending direction of the openings. The body 110 has a first lateral side 122. The connecting line 130 has a second lateral side 138. The first lateral side 122 and the second lateral side 138 are arranged opposite each other. The first magnetic element 114 is disposed on the first lateral side 122. The second magnetic element 134 is disposed on the second lateral side 138.

The at least one fixing member 150 is formed of a metallic material. The first magnetic element 114 and the second magnetic element 134 are magnets, for example. Or, both the first magnetic element 114 and the second magnetic element 134 are equipped with a magnet. For instance, the magnets are respectively disposed on the inner side of the opening of the first magnetic element 114 and the inner side of the opening of the second magnetic element 134.

The body 110 further has a third locking-hole fixing device 124. The third locking-hole fixing device 124 is disposed on lower cover 120. At least one fixing member 150 is inserted into the first locking-hole fixing device 116 and the second locking-hole fixing device 136 by passing through the third locking-hole fixing device 124. The first locking-hole fixing device 116 and the third locking-hole fixing device 124 are aligned in a vertical direction. When the at least one plug 132 is inserted into the at least one slot 112, the second locking-hole fixing device 136 is located between the first locking-hole fixing device 116 and the third locking-hole fixing device 124 as indicated in FIG. 6.

Furthermore, when the at least one plug 132 is inserted into the at least one slot 112, the second locking-hole fixing device 136 is inserted between the first locking-hole fixing device 116 and the third locking-hole fixing device 124 without a gap.

The first locking-hole fixing device 116 has a first hole-slot 126(1) and a second hole-slot 126(2). The second locking-hole fixing device 136 has a first through-hole 140(1) and a second through-hole 140(2). The at least one fixing member 150 includes a first fixing member 152(1) and a second fixing member 152(2). The first fixing member 152(1) is inserted into the first hole-slot 126(1) by passing through the first through-hole 140(1). The second fixing member 152(2) is inserted into the second hole-slot 126(2) by passing through the second through-hole 140(2) as indicated in FIG. 6. The first hole-slot 126(1) and the second hole-slot 126(2) are magnetic.

Furthermore, the third locking-hole fixing device 124 has a third through-hole 124(1) and a fourth through-hole 124(2). The first fixing member 152(1) is inserted into the first hole-slot 126(1) by passing through the third through-hole 124(1) and the first through-hole 140(1). The second fixing member 152(2) is inserted into the second hole-slot 126(2) by passing through the fourth through-hole 124(2) and the second through-hole 140(2) as indicated in FIG. 6. Meanwhile, the first through-hole 140(1) is disposed between the first hole-slot 126(1) and the third through-hole 124(1), and the second through-hole 140(2) is disposed between the second hole-slot 126(2) and the fourth through-hole 124(2). The first through-hole 140(1) and the first hole-slot 126(1) are tightly connected with each other, and the first through-hole 140(1) and the third through-hole 124(1) are also tightly connected with each other. The second through-hole 140(2) and the second hole-slot 126(2) are tightly connected with each other. The second through-hole 140(2) and the fourth through-hole 124(2) are also tightly connected with each other.

When the at least one plug 132 is inserted into the at least one slot 122, one side of the first magnetic element 114 that faces the connecting line 130 has a first polarity, and one side of the second magnetic element 134 that faces the body 110 has a second polarity different from the first polarity. For instance, the first polarity is N polarity, and the second polarity is S polarity. Or, the first polarity is S polarity, and the second polarity is N polarity. Since the first polarity and the second polarity are different from each other, when the second magnetic element 134 approaches the first magnetic element 114, the second magnetic element 134 and the first magnetic element 114 are attracted to each other, thereby making it easier for the connecting line 130 to be fixed on the body 110.

Although the embodiments as indicated in FIG. 3 and FIG. 4 exemplify arrangements in which the first magnetic element 114 is disposed on the first lateral side 122 and the second magnetic element 134 is disposed on the second lateral side 138, other dispositions of the first magnetic element 114 and the second magnetic element 134 may be adopted as long as the first magnetic element 114 and the second magnetic element 134 may be attracted to each other when the connecting line 130 approaches the body 110.

For instance, the first magnetic element 114 may be disposed on one end, such as the lower end, of at least one of the first hole-slot 126(1) and the second hole-slot 126(2) of the first locking-hole fixing device 116. The second magnetic element 134 may be disposed on one end, such as the upper end, of at least one of the first through-hole 140(1) and the second through-hole 140(2) of the second locking-hole fixing device 136. For instance, the first magnetic element 114 may be disposed on the lower end of the first hole-slot 126(1), and the second magnetic element 134 is disposed on the upper end of the first through-hole 140(1). Thus, when the second locking-hole fixing device 136 approaches the first locking-hole fixing device 116, the first magnetic element 114 and the second magnetic element 134, which have different polarities, are attracted to each other, thereby making it easier for the connecting line 130 to be disposed on the body 110.

Besides, the upper and lower ends of each through-hole of the second locking-hole fixing device 136 can have different polarities. For instance, the polarities at the upper and lower ends of the first through-hole 140(1) are different from each other. The polarity at the lower end of the first hole-slot 126(1) and the polarity at the upper end of the first hole-slot 126(1) are different from each other, but the polarity at the lower end of the first hole-slot 126(1) and the polarity at the lower end of the first through-hole 140(1) are identical to each other. Thus, when the connecting line 130 is to be inserted into the body 110, if the orientation of the connecting line 130 is reversed, the connecting line 130 cannot be inserted into the body 110 due to magnetic repulsion because the polarity at the lower end of the first through-hole 140(1) and the polarity at the lower end of the first hole-slot 126(1) are identical to each other. Thus, this design provides a fool-proof function, which prevents the user from mismatching the components.

Furthermore, suppose the at least one plug 132 has a first plug 132(1) and a second plug 132(1), wherein the first plug 132(1) is an HDMI (High Definition Multimedia Interface) plug, and the second plug 132(2) is a USB (Universal Serial Bus) plug. Suppose the at least one slot 112 has a first slot 112(1) and a second slot 112(2), wherein the first slot 112(1) is an HDMI slot, and the second slot 112(2) is a USB slot. The first plug 132(1) is configured to be inserted into the first slot 112(1), and the second plug 132(1) is configured to be inserted into the second slot 112(2).

For instance, suppose the lower ends of the first hole-slot 126(1) and the second hole-slot 126(2) both have an N polarity, the upper ends of the first through-hole 140(1) and the second through-hole 140(2) both have an S polarity, and the lower ends of the first through-hole 140(1) and the second through-hole 140(2) both have an N polarity. When the first plug 132(1) is to be inserted into the first slot 112(1) and the second plug 132(2) is to be inserted into the second slot 112(2), the N polarity at the lower ends of the first hole-slot 126(1) and the second hole-slot 126(2) and the S polarity at the upper ends of the first through-hole 140(1) and the second through-hole 140(2) are attracted to each other, thereby making it easier for the first plug 132(1) and the second plug 132(2) to be inserted into the first slot 112(1) and the second slot 112(2), respectively. If the user inserts the connecting line 130 into the body 110 by reversing the orientation of the connecting line 130, for instance, the user mistakenly inserts the second plug 132(2) and the first plug 132(1) into the first slot 112(1) and the second slot 112(2) respectively, the N polarity at the lower ends of the first hole-slot 126(1) and the second hole-slot 126(2) will repel the N polarity at the lower ends of the first through-hole 140(1) and the second through-hole 140(2), making the connecting line 130 unable to be inserted into the body 110. The user, being reminded of the reversed orientation of the connecting line 130 by way of polarity repulsion, will adjust the orientation of the connecting line 130 for the connecting line 130 to be correctly inserted into the body 110. Thus, the design provides a fool-proof function by way of various arrangements of the polarities.

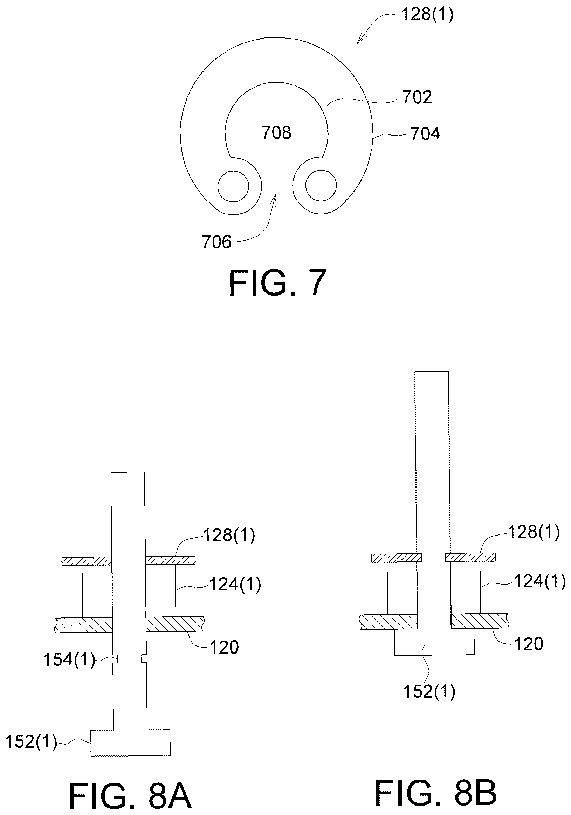

In an embodiment, the body 110 further has at least one C-shaped ring, such as a C-shaped ring 128(1). Referring to FIG. 7, a top view of an example of a C-shaped ring used in the wireless transmission device of FIG. 4 is shown. The C-shaped ring 128(1) has an inner circumference 702, an outer circumference 704, and a notch 706. The center hollowed region 708 allows the fixing member to pass through. Each of the at least one fixing member 150 has a groove. When the at least one fixing member 150 is located in the first locking-hole fixing device 116 and the second locking-hole fixing device 136, the groove of each of the at least one fixing member 150 is engaged with a corresponding C-shaped ring, so that the at least one fixing member 150 is fixed in the first locking-hole fixing device 116 and the second locking-hole fixing device 136.

For example, referring to FIG. 8A and FIG. 8B. FIG. 8A is a schematic side view before a fixing member having a groove is engaged with a C-shaped ring. FIG. 8B is a schematic side view after a fixing member having a groove is engaged with a C-shaped ring. Let the C-shaped ring be exemplified by a C-shaped ring 128(1) corresponding to the first fixing member 152(1) and the first fixing member 152(1). The C-shaped ring 128(2) corresponding to the second fixing member 152(2) is illustrated in FIG. 6 (but is not illustrated in FIG. 4). The C-shaped ring 128(2) and the C-shaped ring 128(1) have similar structures. The first fixing member 152(1) has a groove 154(1), and the second fixing member 152(2) has a groove 154(2). When the C-shaped ring 128(1) is pressed, it expands outwardly and generates a deformation which changes the sizes of the notch 706 and the center hollowed region 708. In the absence of a deformation, the diameter of the inner circumference 702 of the C-shaped ring 128(1) is slightly less than the diameter of the cross section of the first fixing member 152(1), and the area of the center hollowed region 708 of the C-shaped ring 128(1) is slightly less than the area of the cross section of the first fixing member 152(1). When the first fixing member 152(1) moves upward and passes through the lower cover 120 to be mounted into the third through-hole 124(1), the first fixing member 152(1) concurrently passes through the C-shaped ring 128(1) disposed above the third through-hole 124(1). Meanwhile, the C-shaped ring 128(1) generates a deformation, which enlarges the notch 706 so that the center hollowed region 708 of the C-shaped ring 128(1) is enlarged to receive the first fixing member 152(1). When the first fixing member 152(1) continues to move upward, the groove 154(1) of the first fixing member 152(1) and the C-shaped ring 128(1) become substantially aligned on the same horizontal plane, and the inner circumference 702 of the C-shaped ring 128(1) is engaged in the groove 154(1) of the first fixing member 152(1), thereby integrating the C-shaped ring 128(1) and the first fixing member 152(1) as a single piece. Meanwhile, the diameter of the outer circumference 704 of the C-shaped ring 128(1) is greater than the diameter of the opening of the third through-hole 124(1). Therefore, the first fixing member 152(1), which has been integrated as a single piece with the C-shaped ring 128(1), cannot move downward and pass through the third through-hole 124(1). Consequently, the first fixing member 152(1), being limited above the third through-hole 124(1), cannot drop downward and is fixed above the third through-hole 124(1).

That is, when the first fixing member 152(1) is located in the first hole-slot 126(1) of the first locking-hole fixing device 116 and the first through-hole 140(1) of the second locking-hole fixing device 136, the groove 154(1) of the first fixing member 152(1) is engaged with a corresponding C-shaped ring 128(1), so that the first fixing member 152(1) is fixed in the first hole-slot 126(1) of the first locking-hole fixing device 116 and the first through-hole 140(1) of the second locking-hole fixing device 136.

In other words, when the at least one fixing member 150 is inserted into the first locking-hole fixing device 116 and the second locking-hole fixing device 136, at least one C-shaped ring is located under the second locking-hole fixing device 136. For instance, when the first fixing member 152(1) is inserted into the first hole-slot 126(1) of the first locking-hole fixing device 116 and the first through-hole 140(1) of the second locking-hole fixing device 136, the C-shaped ring 128 is located under the first through-hole 140(1) of the second locking-hole fixing device 136. When the second fixing member 152(2) is inserted into the second hole-slot 126(2) of the first locking-hole fixing device 116 and the second through-hole 140(2) of the second locking-hole fixing device 136, the C-shaped ring 128(2) is located under the second through-hole 140(2) of the second locking-hole fixing device 136 as indicated in FIG. 6.

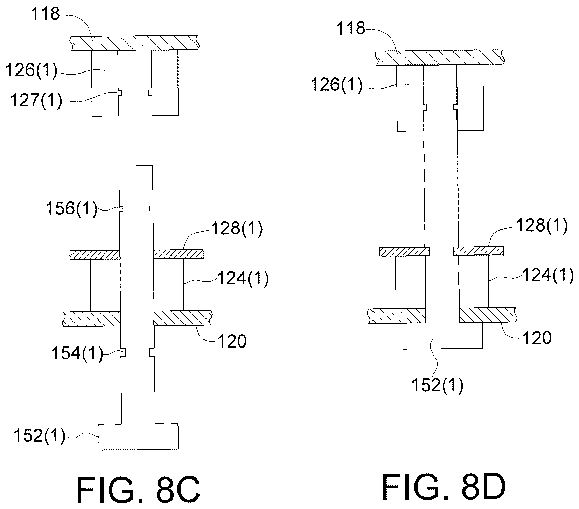

In an embodiment, the fixing member further has a limiting groove, and the inner side of the hole-slot has a protrusion corresponding to the limiting groove. Refer to FIG. 8C and FIG. 8D. FIG. 8C is a schematic side view before a limiting groove of a fixing member is engaged with a protrusion of a corresponding hole-slot. FIG. 8D is a schematic side view after a limiting groove of a fixing member is engaged with a protrusion of a corresponding hole-slot. The first fixing member 152(1) further has a limiting groove 156(1), and the second fixing member 152(2) further has a limiting groove 156(2). For illustration, the limiting groove 156(1) of the first fixing member 152(1) and the protrusion 127(1) of the first hole-slot 126(1) corresponding to the limiting groove 156(1) are taken as an example. After the first fixing member 152(1) is inserted into the first hole-slot 126(1), when the limiting groove 156(1) of the first fixing member 152(1) and the protrusion 127(1) of the first hole-slot 126(1) come into contact, the protrusion 127(1) of the first hole-slot 126(1) is engaged in the limiting groove 156(1) of the first fixing member 152(1), thereby providing a limiting function as indicated in FIG. 8D. The limiting function allows the position of the first fixing member 152(1) to be restricted at a predetermined position within the first hole-slot 126(1). The limiting groove 156(1) is an annular groove, and the protrusion 127(1) is an annular protrusion corresponding to the annular groove. The width and depth of the limiting groove 156(1) are respectively less than that of the groove 154(1), but the present embodiment is not limited thereto.

The quantity of the limiting groove 156(1) of the first fixing member 152(1) may be greater than or equivalent to 1, and the quantity of the protrusion 127(1) on the inner side of the first hole-slot 126(1) may correspondingly be greater than or equivalent to 1. Or, the first fixing member 152(1) does not have any limiting grooves 156(1) disposed thereon, and the inner side of the first hole-slot 126(1) does not have any protrusions 127(1) disposed thereon either. For the purpose of illustration as indicated in FIG. 8A and FIG. 8B, the first fixing member 152(1) does not have any limiting grooves 156(1) disposed thereon, and the inner side of the first hole-slot 126(1) does not have any protrusions 127(1) disposed thereon either.

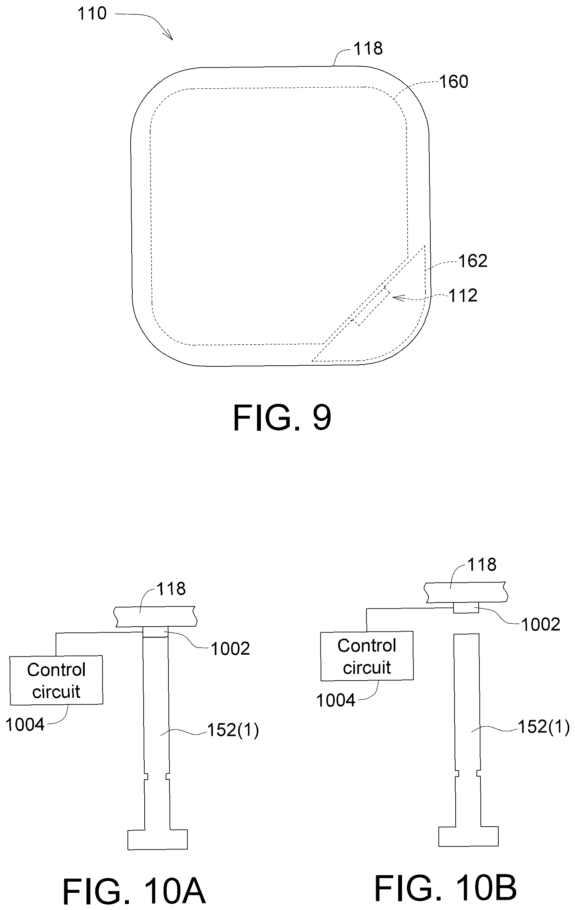

Referring to FIG. 9, a partial top view of a wireless transmission device according to an embodiment of the invention is shown. The body 110 further has a circuit board 160. The body 110 has a corner portion 162. The at least one slot 112 and the first locking-hole fixing device 116 are disposed in a space of the corner portion 162 that does not overlap with the circuit board 160.

Referring to FIG. 10A and FIG. 10B, schematic diagrams of partial components of a wireless transmission device according to another embodiment of the invention are shown. The body 110 further has a switch. When the at least one fixing member 150 is inserted into the first locking-hole fixing device 116 and the second locking-hole fixing device 136, the switch is activated to a first switch state. When the at least one fixing member 150 is removed from the first locking-hole fixing device 116, the switch is activated to a second switch state. As indicated in FIG. 10A, when the first fixing member 152(1) is inserted into the first hole-slot 126(1) of the first locking-hole fixing device 116 and the first through-hole 140(1) of the second locking-hole fixing device 136, the switch 1002 located on the upper cover 118 is activated to a first switch state, such as a turn-on state. As indicated in FIG. 10B, when the first fixing member 152(1) is removed from the first hole-slot 126(1) of the first locking-hole fixing device 116, the switch 1002 located on the upper cover 118 is activated to a second switch state, such as a turn-off state. A control circuit 1004, located on the circuit board 160 and electrically connected to the switch 1002, determines whether the first fixing member 152(1) is already disposed in the first hole-slot 126(1) of the first locking-hole fixing device 116 by detecting whether the switch 1002 is in the turn-on state or the turn-off state. When the first fixing member 152(1) is detached from the first hole-slot 126(1) of the first locking-hole fixing device 116, the switch 1002 changes from the turn-on state to the turn-off state. When the control circuit 1004 detects that the switch 1002 already changes from the turn-on state to the turn-off state, the control circuit 1004 controls the wireless transmission device to emit a warning signal, which notifies the user that the first fixing member 152(1) is already detached from the first hole-slot 126(1). The detachment of the first fixing member 152(1) from the first hole-slot 126(1) causes the connecting line 130 to be detached from the body 110.

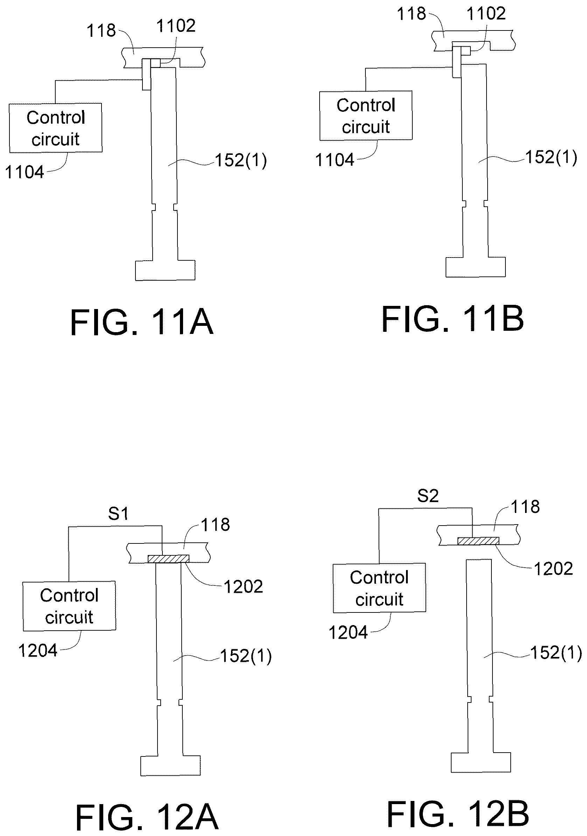

Referring to FIG. 11A and FIG. 11B, schematic diagrams of partial components of a wireless transmission device according to an alternate embodiment of the invention are shown. The body 110 further has a lever. When the at least one fixing member 150 is inserted into the first locking-hole fixing device 116 and the second locking-hole fixing device 136, the lever is toggled to a first lever state. When the at least one fixing member 150 is removed from the first locking-hole fixing device 116, the lever is toggled to a second lever state. As indicated in FIG. 11A, when the first fixing member 152(1) is inserted into the first hole-slot 126(1) of the first locking-hole fixing device 116 and the first through-hole 140(1) of the second locking-hole fixing device 136, the lever 1102 located on the upper cover 118 is toggled to a first lever state, for example, the lever 1102 is toggled to a first position. As indicated in FIG. 11B. When the first fixing member 152(1) is removed from the first hole-slot 126(1) of the first locking-hole fixing device 116, the lever 1102 located on the upper cover 118 is toggled to a second lever state, for example, the lever 1102 is toggled to a second position (for instance, the lever 1102 is toggled to the second lever state by a spring (not illustrated) disposed on the upper cover). A control circuit 1104, located in the circuit board 160 and electrically connected to the lever 1102, determines whether the first fixing member 152(1) is already disposed in the first hole-slot 126(1) of the first locking-hole fixing device 116 by detecting whether the lever 1102 is in the first lever state or the second lever state. When the control circuit 1104 detects that the lever 1102 changes from the first lever state to the second lever state, the control circuit 1104 emits a warning signal, which notifies the user that the first fixing member 152(1) is already detached from the first hole-slot 126(1). The detachment of the first fixing member 152(1) from the first hole-slot 126(1) can cause the connecting line 130 to be detached from the body 110.

Referring to FIG. 12A and FIG. 12B, schematic diagrams of partial components of a wireless transmission device according to another alternate embodiment of the invention are shown. The wireless transmission device further has a control circuit 1204, and the body 110 further has a piezoelectric element. When the at least one fixing member 150 is inserted into the first locking-hole fixing device 116 and the second locking-hole fixing device 136, the piezoelectric element is pressed and outputs a first signal S1 to the control circuit 1204. When the at least one fixing member 150 is removed from the first locking-hole fixing device 116, the piezoelectric element is not pressed and outputs a second signal S2 to the control circuit 1204. As indicated in FIG. 12A, when the first fixing member 152(1) is inserted into the first hole-slot 126(1) of the first locking-hole fixing device 116 and the first through-hole 140(1) of the second locking-hole fixing device 136, the piezoelectric element 1202 is pressed and outputs the first signal S1 to the control circuit 1204. As indicated in FIG. 12B, when the at least one fixing member 150 is removed from the first hole-slot 126(1) of the first locking-hole fixing device 116, the piezoelectric element 1202 is not pressed and outputs a second signal S2 to the control circuit 1204. The control circuit 1204 located above the circuit board 160 determines whether the first fixing member 152(1) is already disposed in the first hole-slot 126(1) of the first locking-hole fixing device 116 according to the first signal S1 and the second signal S2. When the control circuit 1204 receives the first signal S1 and the second signal S2 subsequently, the control circuit 1204 determines that the first fixing member 152(1) is detached from the first hole-slot 126(1) of the first locking-hole fixing device 116. Meanwhile, the control circuit 1204 controls the wireless transmission device to emit a warning signal, which notifies the user that the first fixing member 152(1) is already detached from the first hole-slot 126(1). The detachment of the first fixing member 152(1) from the first hole-slot 126(1) can cause the connecting line 130 to be detached from the body 110.

For illustration, in the present embodiment, the at least one plug 132 has a first plug 132(1) exemplified by an HDMI plug and a second plug 132(2) exemplified by a USB plug, but the embodiments of the invention are not limited thereto. For instance, the at least one plug 132 may have only 1 or more than 2 plug. Or, the at least one plug 132 may be realized by gold-finger-type plug or pogo pin plug. By way of magnetic attraction of different polarities disclosed in the embodiment of the invention, the connection between the pogo-pin type plug and the pogo-pin type slot may be enhanced, so that the connection state of the electric connection between the pogo-pin type plug and the pogo-pin type slot is further stabilized.

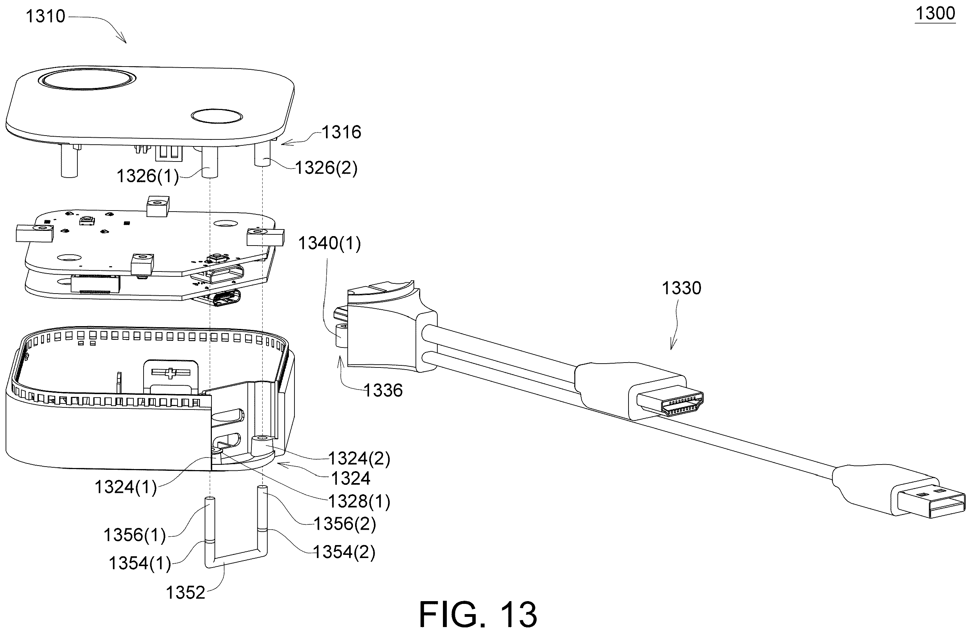

Referring to FIG. 13, an explosion diagram of a wireless transmission device according to another embodiment of the invention is shown. The wireless transmission device 1300 of FIG. 13 is different from the wireless transmission device of FIG. 4 in that the at least one fixing member 150 of the wireless transmission device 1300 of FIG. 13 is realized by a U-shaped fixing member 1352. The U-shaped fixing member 1352 is configured to be inserted into the first locking-hole fixing device 1316 and the second locking-hole fixing device 1336, so that the connecting line 1330 is connected with the body 1310. The U-shaped fixing member 1352 is inserted into the first locking-hole fixing device 1316 and the second locking-hole fixing device 1336 by passing through the third locking-hole fixing device 1324. The U-shaped fixing member 1352 has a first end 1356(1) and a second end 1356(2). The first end 1356(1) of the U-shaped fixing member 1352 is inserted into the first hole-slot 1326(1) by passing through the third through-hole 1324(1) and the first through-hole 1340(1). The second end 1356(2) of the U-shaped fixing member 1352 is inserted into the second hole-slot 1326(2) by passing through the fourth through-hole 1324(2) and the second through-hole (not illustrated in FIG. 13). The first hole-slot 1326(1) and the second hole-slot 1326(2) are magnetic or both are equipped with a magnet. The U-shaped fixing member 1352 is formed of a metallic material, so that the first end 1356(1) and the second end 1356(2) of the U-shaped fixing member 1352 may be attracted by magnetism and attached to the first hole-slot 1326(1) and the second hole-slot 1326(2).

The U-shaped fixing member 1352 further has a groove 1354(1) and a groove 1354(2). The groove 1354(1) may be engaged with the C-shaped ring 1328(1), and the groove 1354(2) may be engaged with another C-shaped ring (not illustrated in FIG. 13), so that the U-shaped fixing member 1352 is limited above the third through-hole 1324(1) and the third through-hole 1324(2).

According to the wireless transmission device disclosed in the embodiments of the invention, the connecting line is firmly fixed on the body. Under the premise of complying with the integrated design, the wireless transmission device of the invention provides a design scheme using an external connecting line, thereby possessing the advantages of a consistent overall appearance, stable signal transmission, and reduced maintenance cost. The first and second magnetic elements are attracted to each other by way of magnetism, thereby making it easier for the user to place the connecting line on the body. Moreover, such design has a fool-proof function which effectively avoids component mismatching. Furthermore, the design of attracting the at least one fixing member by the magnetism of the first locking-hole fixing device not only increases installation convenience but also enhances the connection between the at least one fixing member and the first locking-hole fixing device, so that the user can successfully complete the operation of wire replacement. Besides, the malfunction of the wireless transmission device caused by improper wire configuration in the wireless transmission device may be avoided.

While the invention has been described by way of example and in terms of the preferred embodiment (s), it is to be understood that the invention is not limited thereto. Based on the technical features embodiments of the present invention, a person ordinarily skilled in the art will be able to make various modifications and similar arrangements and procedures without breaching the spirit and scope of protection of the invention. Therefore, the scope of protection of the present invention should be accorded with what is defined in the appended claims.

## Claims

1. A wireless transmission device (100, 1300), comprising:
a body (110), having at least one slot (112), a first magnetic element (114), and a first locking-hole fixing device (116), wherein the first magnetic element (114), disposed adjacent to the at least one slot (112), is magnetic;
a connecting line (130), having at least one plug (132), a second magnetic element (134), and a second locking-hole fixing device (136), wherein the second magnetic element (134) is disposed adjacent to the at least one plug (132); and
at least one fixing member (150), configured to be inserted into the first locking-hole fixing device (116) and the second locking-hole fixing device (136), so that the connecting line (130) is connected with the body (110);
wherein when the at least one plug (132) is inserted into the at least one slot (112), the first magnetic element (114) and the second magnetic element (134) are attracted to each other;
wherein when the at least one fixing member (150) is inserted into the first locking-hole fixing device (116) and the second locking-hole fixing device (136), the at least one fixing member (150) is attracted by the magnetism of the first locking-hole fixing device (116).

2. The wireless transmission device (100, 1300) according to claim 1, wherein the at least one fixing member (150) comprises a first fixing member (152(1)) and a second fixing member (152(1)); the body (110) has an upper cover (118) and a lower cover (120), the first locking-hole fixing device (116) is disposed on the upper cover (118); the first fixing member (152(1)) and the second fixing member (152(2)) are inserted into the first locking-hole fixing device (116) and the second locking-hole fixing device (136) by passing through the lower cover (120).

3. The wireless transmission device (100, 1300) according to claim 1, wherein the opening of the second locking-hole fixing device (136) and the opening of the first locking-hole fixing device (116) are arranged opposite each other along an extending direction of the openings; the body (110) has a first lateral side (122), the connecting line (130) has a second lateral side (138), and the first lateral side (122) is opposite to the second lateral side (138); the first magnetic element (114) is disposed on the first lateral side (122), and the second magnetic element (134) is disposed on the second lateral side (138).

4. The wireless transmission device (100, 1300) according to claim 1, wherein the at least one fixing member (150) is formed of a metallic material, and the first magnetic element (114) and the second magnetic element (134) are magnets.

5. The wireless transmission device (100, 1300) according to claim 1, wherein the body (110) further has an upper cover (118), a lower cover (120), and a third locking-hole fixing device (124), the first locking-hole fixing device (116) is disposed on the upper cover (118), the third locking-hole fixing device (124) is disposed on the lower cover (120), the at least one fixing member (150) is inserted into the first locking-hole fixing device (116) and the second locking-hole fixing device (136) by passing through the third locking-hole fixing device (124).

6. The wireless transmission device (100, 1300) according to claim 5, wherein the first locking-hole fixing device (116) and the third locking-hole fixing device (124) are aligned in a vertical direction, when the at least one plug (132) is inserted into the at least one slot (112), the second locking-hole fixing device (136) is located between the first locking-hole fixing device (116) and the third locking-hole fixing device (124).

7. The wireless transmission device (100, 1300) according to claim 6, wherein when the at least one plug (132) is inserted into the at least one slot (112), the second locking-hole fixing device (136) is inserted between the first locking-hole fixing device (116) and the third locking-hole fixing device (124) without a gap.

8. The wireless transmission device (100, 1300) according to claim 1, wherein the first locking-hole fixing device (116) has a first hole-slot (126(1)) and a second hole-slot (126(2)), the second locking-hole fixing device (136) has a first through-hole (140(1)) and a second through-hole (140(2)), the at least one fixing member (150) comprises a first fixing member (152(1)) and a second fixing member (152(2)), the first fixing member (152(1)) is inserted into the first hole-slot (126(1)) by passing through the first through-hole (140(1)), the second fixing member (152(2)) is inserted into the second hole-slot (126(2)) by passing through the second through-hole (140(2)), the first hole-slot (126(1)) and the second hole-slot (126(2)) are magnetic.

9. The wireless transmission device (100, 1300) according to claim 1, wherein when the at least one plug (132) is inserted into the at least one slot (112), one side of the first magnetic element (114) that faces the connecting line (130) has a first polarity, and one side of the second magnetic element (134) that faces the body (110) has a second polarity different from the first polarity.

10. The wireless transmission device (100, 1300) according to claim 1, wherein the body (110) further has at least one C-shaped ring (128(1), 128(2)), each of the at least one fixing member (150) has a groove (154(1), 154(2)), when the at least one fixing member (150) is located in the first locking-hole fixing device (116) and the second locking-hole fixing device (136), the groove (154(1), 154(2)) of each of the at least one fixing member (150) is engaged with a corresponding C-shaped ring (128(1), 128(2)), so that the at least one fixing member (150) is fixed in the first locking-hole fixing device (116) and the second locking-hole fixing device (136).

11. The wireless transmission device (100, 1300) according to claim 10, wherein when the at least one fixing member (150) is inserted into the first locking-hole fixing device (116) and the second locking-hole fixing device (136), the at least one C-shaped ring (128(1), 128(2)) is located under the second locking-hole fixing device (136).

12. The wireless transmission device (100, 1300) according to claim 1, wherein the body (110) further has a circuit board (160), the body (110) has a corner portion (162), the at least one slot (112) and the first locking-hole fixing device (116) are disposed in a space of the corner portion (162) that does not overlap with the circuit board (160).

13. The wireless transmission device (100, 1300) according to claim 1, wherein the body (110) further has a switch (1002), when the at least one fixing member (150) is inserted into the first locking-hole fixing device (116) and the second locking-hole fixing device (136), the switch (1002) is activated to a first switch state, when the at least one fixing member (150) is moved from the first locking-hole fixing device (116), the switch (1002) is activated to a second switch state.

14. The wireless transmission device (100, 1300) according to claim 1, the body (110) further has a lever (1102), when the at least one fixing member (150) is inserted into the first locking-hole fixing device (116) and the second locking-hole fixing device (136), the lever (1102) is toggled to a first lever state, when the at least one fixing member (150) is moved from the first locking-hole fixing device (116), the lever (1102) is toggled to a second lever state.

15. The wireless transmission device (100, 1300) according to claim 1, the wireless transmission device (100, 1300) further has a control circuit (1004, 1104, 1204), the body (110) further has a piezoelectric element (1202), when the at least one fixing member (150) is inserted into the first locking-hole fixing device (116) and the second locking-hole fixing device (136), the piezoelectric element (1202) is pressed and outputs a first signal to the control circuit (1004, 1104, 1204), when the at least one fixing member (150) is moved from the first locking-hole fixing device (116), the piezoelectric element (1202) is not pressed and outputs a second signal to the control circuit. (1004, 1104, 1204)
